# EUROPEAN PATENT APPLICATION

(11) **EP 4 428 094 A1**
(43) Date of publication of application: **11.09.2024**
(21) Application number: 23160425.7
(22) Date of filing: 07.03.2023
(51) Int. Cl.: C01B 3/38

(54) **PROCESS AND PLANT FOR PRODUCING A SYNTHESIS GAS STREAM WITH MINIMUM EMISSION OF AMMONIA**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Coscia, Antonio, 60439 Frankfurt am Main (DE); Patel, Mahal, 60439 Frankfurt am Main (DE)
(74) Representative: Air Liquide

(57) **Abstract**

Provided is a process for producing synthesis gas with minimized emissions of ammonia. The process includes converting hydrocarbon containing feed stream in reformer tubes (104A-N) and discharging a crude synthesis gas stream and a flue gas stream, routing the flue gas stream through a catalyst unit (112), cooling the crude synthesis gas stream to form an aqueous condensate stream comprising ammonia, tripping the aqueous condensate stream comprising ammonia with a stripping gas stream, routing out a condensate stream depleted in ammonia and a stripping gas stream enriched in ammonia, introducing the stripping gas stream enriched in ammonia into a flue gas duct (110), where both the at least a portion of the flue gas stream and the at least a portion of the stripping gas stream enriched in ammonia pass through a first catalyst zone (114) and subsequently through a second catalyst zone (116) of the catalyst unit (112).

## Description

### TECHNICAL FIELD

The present disclosure relates generally to synthesis gas production; more specifically, the present disclosure relates to a process and a plant for producing a synthesis gas comprising hydrogen and carbon oxides by steam reforming of a hydrocarbon containing feed stream in a steam reformer with an arrangement to minimize the emission of nitrogen oxides and ammonia.

### BACKGROUND

There is an ongoing desire to reduce atmospheric emissions from chemical plants, and particularly ammonia emissions from synthesis gas production plants. With the stricter regulations in place in Europe regarding ammonia emissions and atmospheric concentrations, reducing such ammonia emissions has become critical for both new plants and existing plants undergoing revamps. The process of producing synthesis gas by steam reforming of a hydrocarbon containing feedstock in a steam reformer is well-known and described. The vent stream released from the synthesis gas production plants after the catalytic steam reforming includes impurities e.g. methanol, organic acids, and ammonia with large variations resulting from the feedstock. Further, there is limited or no control over vent stream flow. The selective non-catalytic reduction (SNCR) effect of injecting aqueous ammonia or urea into the flue gases from the combustion process to reduce nitrogen oxides (NOx) to nitrogen gas (N₂), carbon-di-oxide (CO₂), and water (H₂O) are very limited and does not work due to a low nitrogen oxides level from burners and also no control is possible on the vent stream flow. As per state-of-the-art solutions, stripper vent injection leads to either overall increased nitrogen oxides level or emission of impurities to the atmosphere.

Further, unreacted ammonia produced during the reaction between nitrogen oxides and ammonia (i.e. NH₃ slip) goes into the atmosphere.

Therefore, there is a need to address the aforementioned technical drawbacks in existing known technologies to lower the emission of ammonia formed during the synthesis gas production.

### SUMMARY

The present disclosure seeks to provide an improved approach to reduce the ammonia emission of a synthesis gas production plant by oxidizing the ammonia that is formed during the synthesis gas production using a catalyst unit. An aim of the present disclosure is to provide a solution that overcomes, at least partially, the problems encountered in the prior art and provide a process and a plant for producing a synthesis gas comprising hydrogen and carbon oxides by steam reforming of a hydrocarbon containing feed stream, with an arrangement to minimize emissions of ammonia from the synthesis gas production plant. The process includes introducing at least a portion, preferably all of a stripping gas stream enriched in ammonia into a flue gas duct at a first injection point provided on the flue gas duct upstream of the catalyst unit, where both the at least a portion of the flue gas stream and the at least a portion of the stripping gas stream enriched in ammonia pass through a first catalyst zone of the catalyst unit for the selective catalytic reduction (SCR) of nitrogen oxides with ammonia to nitrogen and subsequently through a second catalyst zone of the catalyst unit for catalytic oxidation of ammonia to nitrogen oxides. The oxidation catalyst serves to oxidize the remaining ammonia to nitrogen oxide since the emission of nitrogen oxide is less problematic than the emission of ammonia. Thus, the emission of impurities to the atmosphere from the plant is significantly reduced by the selective reduction of nitrogen oxides (NOx) and oxidization of ammonia using catalytic conversion.

The object of the present disclosure is achieved by the solutions provided in the enclosed independent claims. Advantageous implementations of the present disclosure are further defined in the enclosed dependent claims.

According to a first aspect, the present disclosure provides a process for producing a synthesis gas comprising hydrogen and carbon oxides by steam reforming of a hydrocarbon containing feed stream with steam in a steam reformer, with minimized emissions of ammonia, the process comprising the following steps:
(a) Providing a steam reformer, comprising:
   (a1) a plurality of catalyst filled reformer tubes with means for introducing the hydrocarbon containing feed stream and steam into the reformer tubes, and means for discharging a crude synthesis gas stream from the reformer tubes;
   (a2) a reformer furnace with a floor, a ceiling and side walls which form a furnace interior, with the reformer tubes being arranged inside of the furnace interior and being heated by a plurality of burners;
   (a3) a flue gas duct being arranged in fluid connection to the furnace interior through one of the side walls;
   (a4) a catalyst unit being arranged inside of the flue gas duct and outside of the furnace interior, the catalyst unit comprising a first catalytic zone active for the selective catalytic reduction (SCR) of nitrogen oxides with ammonia to nitrogen, and a second catalytic zone active for catalytic oxidation of ammonia to nitrogen oxides;
(b) providing the hydrocarbon containing feed stream and a reforming steam stream and introducing the hydrocarbon containing feed stream and the reforming steam stream into the reformer tubes;
(c) providing a fuel gas stream and an oxygen containing oxidant stream and introducing the fuel gas stream and the oxygen containing oxidant stream into the burners, combusting the fuel gas stream with the oxygen containing oxidant stream in the burners and thereby heating the reformer tubes and generating a flue gas stream comprising nitrogen oxides;
(d) converting the hydrocarbon containing feed stream with the reforming steam stream under steam reforming conditions in the reformer tubes, discharging a crude synthesis gas comprising hydrogen, carbon oxides, unconverted steam, and ammonia from the reformer tubes;
(e) discharging the flue gas stream from the furnace interior through the flue gas duct, and routing at least a portion, preferably all of the flue gas stream through the catalyst unit;
(f) cooling the crude synthesis gas stream in at least one cooling apparatus to a temperature below its dew point to form an aqueous condensate stream comprising ammonia, separating and discharging a synthesis gas stream depleted in water and ammonia from the aqueous condensate stream comprising ammonia using a phase separation apparatus;
(g) stripping the aqueous condensate stream comprising ammonia with a stripping gas stream in a stripping apparatus, routing out a condensate stream depleted in ammonia from the stripping apparatus, routing out a stripping gas stream enriched in ammonia from the stripping apparatus;
(h) introducing at least a portion, preferably all of the stripping gas stream enriched in ammonia into the flue gas duct at a first injection point provided on the flue gas duct upstream of the catalyst unit;
(i) wherein both the at least a portion of the flue gas stream and the at least a portion of the stripping gas stream enriched in ammonia pass through the first catalyst zone and subsequently through the second catalyst zone of the catalyst unit.

The process for producing the synthesis gas comprising hydrogen and carbon oxides by steam reforming of the hydrocarbon containing feed stream with steam in the steam reformer according to the present disclosure is of advantage in that the process minimizes the emission of ammonia by catalytic oxidation of ammonia. The process includes introducing at least a portion, preferably all of a stripping gas stream enriched in ammonia into a flue gas duct at a first injection point provided on the flue gas duct upstream of the catalyst unit, where both the at least a portion of the flue gas stream and the at least a portion of the stripping gas stream enriched in ammonia pass through the first catalyst zone for the selective catalytic reduction (SCR) of nitrogen oxides with ammonia to nitrogen and subsequently through the second catalyst zone of the catalyst unit for catalytic oxidation of ammonia to nitrogen oxides. Thus, the emission of impurities to the atmosphere from the plant is significantly reduced by the selective reduction of nitrogen oxides (NOx) and oxidization of ammonia using catalytic conversion.

According to a second aspect, the present disclosure provides a plant for producing a synthesis gas comprising hydrogen and carbon oxides by steam reforming of a hydrocarbon containing feed stream with steam in a steam reformer, with minimized emissions of ammonia, the plant comprising the following means and apparatuses, arranged in fluid connection with one another:
(a) a steam reformer, comprising:
   (a1) a plurality of catalyst filled reformer tubes with means for introducing the hydrocarbon containing feed stream and steam into the reformer tubes, and means for discharging a crude synthesis gas stream from the reformer tubes;
   (a2) a reformer furnace with a floor, a ceiling and side walls which form a furnace interior, with the reformer tubes being arranged inside of the furnace interior and being heated by a plurality of burners;
   (a3) a flue gas duct being arranged in fluid connection to the furnace interior through one of the side walls;
   (a4) a catalyst unit being arranged inside of the flue gas duct and outside of the furnace interior, the catalyst unit comprising a first catalytic zone active for the selective catalytic reduction (SCR) of nitrogen oxides with ammonia to nitrogen, and a second catalytic zone active for catalytic oxidation of ammonia to nitrogen oxides;
(b) means for providing the hydrocarbon containing feed stream and a reforming steam stream and means for introducing the hydrocarbon containing feed stream and the reforming steam stream into the reformer tubes;
(c) means for providing a fuel gas stream and an oxygen containing oxidant stream and introducing the fuel gas stream and the oxygen containing oxidant stream into the burners;
(d) means for discharging a crude synthesis gas comprising hydrogen, carbon oxides, unconverted steam, and ammonia from the reformer tubes;
(e) means for discharging a flue gas stream from the furnace interior through the flue gas duct, and means for routing at least a portion, preferably all of the flue gas stream through the catalyst unit;
(f) at least one cooling apparatus for cooling the crude synthesis gas stream to a temperature below its dew point to form an aqueous condensate stream comprising ammonia, a phase separation apparatus for separating and discharging a synthesis gas stream depleted in water and ammonia from the aqueous condensate stream comprising ammonia;
(g) a stripping apparatus for stripping the aqueous condensate stream comprising ammonia with a stripping gas stream, means for routing out a condensate stream depleted in ammonia from the stripping apparatus, means for routing out a stripping gas stream enriched in ammonia from the stripping apparatus;
(h) means for introducing at least a portion, preferably all of the stripping gas stream enriched in ammonia into the flue gas duct at a first injection point provided on the flue gas duct upstream of the catalyst unit;
(i) wherein means are comprised that allow that both the at least a portion of the flue gas stream and the at least a portion of the stripping gas stream enriched in ammonia pass through the first catalyst zone and subsequently through the second catalyst zone of the catalyst unit.

The plant for producing the synthesis gas comprising hydrogen and carbon oxides by steam reforming of the hydrocarbon containing feed stream with steam in a steam reformer according to the present disclosure is of advantage in that the plant facilitates minimizing the amount of ammonia formed during the synthesis gas production by catalytic oxidation of ammonia. The catalyst unit of the plant comprising the first catalytic zone performs selective catalytic reduction (SCR) of nitrogen oxides with ammonia to nitrogen, and the second catalytic zone performs catalytic oxidation of ammonia to nitrogen oxides. Thus, the emission of impurities to the atmosphere from the plant is significantly reduced by the selective reduction of nitrogen oxides (NOx) and oxidization of ammonia using catalytic conversion.

Embodiments of the present disclosure eliminate the aforementioned drawbacks in existing known approaches by minimizing the amount of ammonia formed during the synthesis gas production by performing catalytic oxidation of ammonia.

Additional aspects, advantages, features and objects of the present disclosure are made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, the same elements have been indicated by identical numbers. Embodiments of the present disclosure will now be described, by way of example only, with reference to the following diagrams wherein:

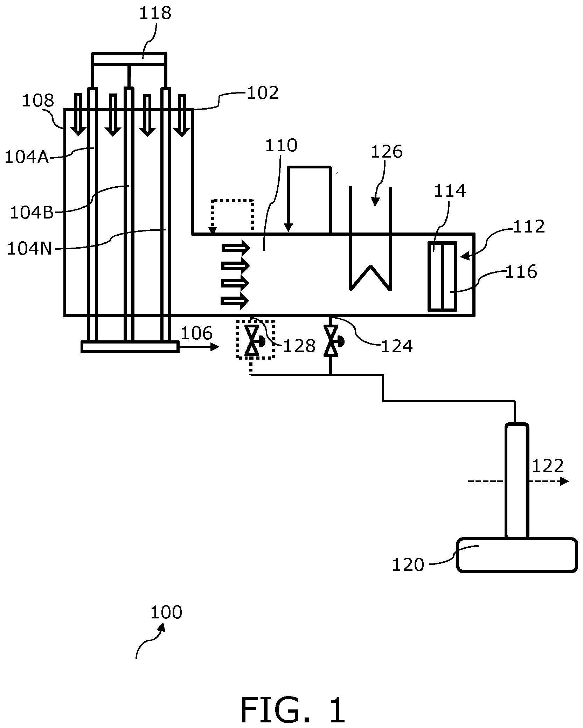

**FIG. 1** is a block diagram of a plant for producing a synthesis gas comprising hydrogen and carbon oxides by steam reforming of a hydrocarbon containing feed stream with steam in a steam reformer, with minimized emissions of ammonia according to an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

As used herein, several terms are defined below:
Steam reforming conditions are known to those skilled in the art from the prior art. These are the physicochemical conditions under which a measurable, preferably industrially relevant, conversion of hydrocarbons to synthesis gas products is achieved. For example, in the context of steam reforming, important parameters include adjustment of a suitable steam reforming entry temperature of typically about 1000 °C and addition of steam to the input gas containing hydrocarbons and thus adjustment of a steam/carbon ratio (S/C ratio). Typical values for the S/C ratio are between 1.5 and 3.5 mol/mol. Typical steam reforming inlet temperatures are up to 700 °C and typically range between 550 and 650 °C. Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention. Specifically, a reformer furnace is operated so as to allow or assist the adjustment of the steam reforming conditions.

Pressures, if any, are reported in absolute pressure units, bara for short, or in gauge pressure units, barg for short, unless otherwise stated in the particular individual context.

A fluid connection between two regions of the apparatus or plant according to the present invention is to be understood as meaning any type of connection whatsoever which makes it possible for a fluid, for example a gas stream, to flow from one to the other of the two regions, neglecting any interposed regions or components. In particular a direct fluid connection is to be understood as meaning any type of connection whatsoever which makes it possible for a fluid, for example, a gas stream, to flow directly from one to the other of the two regions, wherein no further regions or components are interposed with the exception of purely transportational operations and the means required therefor, for example, pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e. for example pipelines, pumps, compressors, valves, which seem necessary or sensible to said skilled person for performance of this process step on the basis of his knowledge of the art.

For the purposes of this description steam is to be understood as being synonymous with water vapor unless the opposite is indicated in an individual case. By contrast, the term "water" refers to water in the liquid state of matter unless otherwise stated in an individual case.

According to a first aspect, the present disclosure provides a process for producing a synthesis gas comprising hydrogen and carbon oxides by steam reforming of a hydrocarbon containing feed stream with steam in a steam reformer, with minimized emissions of ammonia, the process comprising the following steps:
(a) Providing a steam reformer, comprising:
   (a1) a plurality of catalyst filled reformer tubes with means for introducing the hydrocarbon containing feed stream and steam into the reformer tubes, and means for discharging a crude synthesis gas stream from the reformer tubes;
   (a2) a reformer furnace with a floor, a ceiling and side walls which form a furnace interior, with the reformer tubes being arranged inside of the furnace interior and being heated by a plurality of burners;
   (a3) a flue gas duct being arranged in fluid connection to the furnace interior through one of the side walls;
   (a4) a catalyst unit being arranged inside of the flue gas duct and outside of the furnace interior, the catalyst unit comprising a first catalytic zone active for the selective catalytic reduction (SCR) of nitrogen oxides with ammonia to nitrogen, and a second catalytic zone active for catalytic oxidation of ammonia to nitrogen oxides;
(b) providing the hydrocarbon containing feed stream and a reforming steam stream and introducing the hydrocarbon containing feed stream and the reforming steam stream into the reformer tubes;
(c) providing a fuel gas stream and an oxygen containing oxidant stream and introducing the fuel gas stream and the oxygen containing oxidant stream into the burners, combusting the fuel gas stream with the oxygen containing oxidant stream in the burners and thereby heating the reformer tubes and generating a flue gas stream comprising nitrogen oxides;
(d) converting the hydrocarbon containing feed stream with the reforming steam stream under steam reforming conditions in the reformer tubes, discharging a crude synthesis gas comprising hydrogen, carbon oxides, unconverted steam, and ammonia from the reformer tubes;
(e) discharging the flue gas stream from the furnace interior through the flue gas duct, and routing at least a portion, preferably all of the flue gas stream through the catalyst unit;
(f) cooling the crude synthesis gas stream in at least one cooling apparatus to a temperature below its dew point to form an aqueous condensate stream comprising ammonia, separating and discharging a synthesis gas stream depleted in water and ammonia from the aqueous condensate stream comprising ammonia using a phase separation apparatus;
(g) stripping the aqueous condensate stream comprising ammonia with a stripping gas stream in a stripping apparatus, routing out a condensate stream depleted in ammonia from the stripping apparatus, routing out a stripping gas stream enriched in ammonia from the stripping apparatus;
(h) introducing at least a portion, preferably all of the stripping gas stream enriched in ammonia into the flue gas duct at a first injection point provided on the flue gas duct upstream of the catalyst unit;
(i) wherein both the at least a portion of the flue gas stream and the at least a portion of the stripping gas stream enriched in ammonia pass through the first catalyst zone and subsequently through the second catalyst zone of the catalyst unit.

The process for producing the synthesis gas comprising hydrogen and carbon oxides by steam reforming of the hydrocarbon containing feed stream with steam in the steam reformer according to the present disclosure is of advantage in that the process minimizes the emission of ammonia by oxidization of ammonia using catalytic conversion. The process includes introducing at least a portion, preferably all of a stripping gas stream enriched in ammonia into a flue gas duct at a first injection point provided on the flue gas duct upstream of the catalyst unit, where both the at least a portion of the flue gas stream and the at least a portion of the stripping gas stream enriched in ammonia pass through the first catalyst zone for the selective catalytic reduction (SCR) of nitrogen oxides with ammonia to nitrogen and subsequently through the second catalyst zone of the catalyst unit for catalytic oxidation of ammonia to nitrogen oxides. Thus, the emission of impurities to the atmosphere from the plant is significantly reduced by the selective reduction of nitrogen oxides (NOx) and oxidization of ammonia using catalytic conversion.

The stripping apparatus may be a deaerator. Both aeration and stripping with the stripping gas stream involve a gas-liquid mass-transfer process for stripping out dissolved gases from the aqueous condensate stream comprising ammonia.

Optionally, at least a portion, preferably all of the condensate stream depleted in ammonia, except a purge stream, is used to generate at least a part of the reforming steam stream.

Optionally, the first catalyst zone and the second catalyst zone of the catalyst unit comprise at least one catalyst, selected from the group comprising:
Catalyst beds of particulate catalysts, catalytic wire meshes, honeycomb catalysts, structured packing catalysts,
wherein the catalyst to be used in the first catalyst zone is active for the selective catalytic reduction (SCR) of nitrogen oxides with ammonia to nitrogen, and the catalyst to be used in the second catalyst zone is active for catalytic oxidation of ammonia to nitrogen oxides.

In some embodiments, the catalyst bed is active for double functional selective catalytic reduction and oxidation, where the dual catalytic features of both reduction and oxidation are satisfied simultaneously. The selective catalytic reduction (SCR) of nitrogen oxides with ammonia to nitrogen performed in the first catalyst zone followed by the catalytic oxidation of ammonia to nitrogen oxides in the second catalyst zone help to manage the ammonia slip of the catalyst unit as there is no flow control on the stripping gas stream enriched in ammonia equivalent the ammonia flow control of the SCR unit. An arrangement to perform selective catalytic reduction (SCR) of nitrogen oxides with ammonia to nitrogen followed by the catalytic oxidation of ammonia helps to maintain overall nitrogen oxides of the catalyst unit at the same level or a reduced level and the other impurities will be oxidized.

Optionally, in the catalyst unit, the second catalyst zone is arranged downstream of the first catalyst zone, with regard to the flow direction of the flue gas.

Optionally, all, or a constant portion, of the stripping gas stream enriched in ammonia is introduced into the flue gas duct. The stripping gas stream enriched in ammonia is introduced into the flue gas duct at a temperature e.g., 400 degrees Celsius, low enough to prevent oxidation of impurities.

Optionally, at least one, preferably at least two heat exchangers are arranged in the flue gas duct between the first injection point for the stripping gas stream enriched in ammonia and the catalyst unit. The at least two heat exchangers installed between a series provide enough pressure drop to ensure uniform mixing of the stripping gas stream enriched in ammonia with the flue gas stream. The at least two heat exchangers help to equalize the flow of the stripping gas stream enriched in ammonia mixed with the flue gas stream through the catalyst bed, thus avoiding the need for an injection grid, a static mixer, or any other equipment used typically in a selective catalytic reduction (SCR) unit.

Optionally, the location of the first injection point is selected so that the average temperature of the flue gas inside of the flue gas duct at this location equals 500 °C or below, preferably 400 °C or below, when the reformer furnace is operated.

Optionally, an additional second injection point for the stripping gas stream enriched in ammonia is provided on the flue gas duct upstream of the position of the first injection point, with regard to the flow direction of the flue gas, wherein the location of the second injection point is selected so that the average temperature of the flue gas inside of the flue gas duct at this location equals 400 °C or above, preferably 500 °C or above, when the reformer furnace is operated. The stripping gas stream enriched in ammonia is routed to the second injection point for oxidation at high temperatures during online maintenance or replacement of the catalyst.

According to a second aspect, the present disclosure provides a plant for producing a synthesis gas comprising hydrogen and carbon oxides by steam reforming of a hydrocarbon containing feed stream with steam in a steam reformer, with minimized emissions of ammonia, the plant comprising the following means and apparatuses, arranged in fluid connection with one another:
(a) a steam reformer, comprising:
   (a1) a plurality of catalyst filled reformer tubes with means for introducing the hydrocarbon containing feed stream and steam into the reformer tubes, and means for discharging a crude synthesis gas stream from the reformer tubes;
   (a2) a reformer furnace with a floor, a ceiling and side walls which form a furnace interior, with the reformer tubes being arranged inside of the furnace interior and being heated by a plurality of burners;
   (a3) a flue gas duct being arranged in fluid connection to the furnace interior through one of the side walls;
   (a4) a catalyst unit being arranged inside of the flue gas duct and outside of the furnace interior, the catalyst unit comprising a first catalytic zone active for the selective catalytic reduction (SCR) of nitrogen oxides with ammonia to nitrogen, and a second catalytic zone active for catalytic oxidation of ammonia to nitrogen oxides;
(b) means for providing the hydrocarbon containing feed stream and a reforming steam stream and means for introducing the hydrocarbon containing feed stream and the reforming steam stream into the reformer tubes;
(c) means for providing a fuel gas stream and an oxygen containing oxidant stream and introducing the fuel gas stream and the oxygen containing oxidant stream into the burners;
(d) means for discharging a crude synthesis gas comprising hydrogen, carbon oxides, unconverted steam, and ammonia from the reformer tubes;
(e) means for discharging a flue gas stream from the furnace interior through the flue gas duct, and means for routing at least a portion, preferably all of the flue gas stream through the catalyst unit;
(f) at least one cooling apparatus for cooling the crude synthesis gas stream to a temperature below its dew point to form an aqueous condensate stream comprising ammonia, a phase separation apparatus for separating and discharging a synthesis gas stream depleted in water and ammonia from the aqueous condensate stream comprising ammonia;
(g) a stripping apparatus for stripping the aqueous condensate stream comprising ammonia with a stripping gas stream, means for routing out a condensate stream depleted in ammonia from the stripping apparatus, means for routing out a stripping gas stream enriched in ammonia from the stripping apparatus;
(h) means for introducing at least a portion, preferably all of the stripping gas stream enriched in ammonia into the flue gas duct at a first injection point provided on the flue gas duct upstream of the catalyst unit;
(i) wherein means are comprised that allow that both the at least a portion of the flue gas stream and the at least a portion of the stripping gas stream enriched in ammonia pass through the first catalyst zone and subsequently through the second catalyst zone of the catalyst unit.

Optionally, means are comprised that allow that at least a portion, preferably all of the condensate stream depleted in ammonia, except a purge stream, is used to generate at least a part of the reforming steam stream.

Optionally, the first catalyst zone and the second catalyst zone of the catalyst unit comprise at least one catalyst, selected from the group comprising:
Catalyst beds of particulate catalysts, catalytic wire meshes, honeycomb catalysts, structured packing catalysts,
wherein the catalyst to be used in the first catalyst zone is active for the selective catalytic reduction (SCR) of nitrogen oxides with ammonia to nitrogen, and the catalyst to be used in the second catalyst zone is active for catalytic oxidation of ammonia to nitrogen oxides.

Optionally, the catalyst unit, the second catalyst zone is arranged downstream of the first catalyst zone, with regard to the flow direction of the flue gas.

Optionally, means are comprised that allow that all, or a constant portion, of the stripping gas stream enriched in ammonia is introduced into the flue gas duct.

Optionally, at least one, preferably at least two heat exchangers are arranged in the flue gas duct between the first injection point for the stripping gas stream enriched in ammonia and the catalyst unit.

Optionally, the location of the first injection point is selected so that the average temperature of the flue gas inside of the flue gas duct at this location equals 500 °C or below, preferably 400 °C or below, when the reformer furnace is operated.

Optionally, an additional second injection point for the stripping gas stream enriched in ammonia is provided on the flue gas duct upstream of the position of the first injection point, with regard to the flow direction of the flue gas, wherein the location of the second injection point is selected so that the average temperature of the flue gas inside of the flue gas duct at this location equals 400 °C or above, preferably 500 °C or above, when the reformer furnace is operated.

The plant for producing the synthesis gas comprising hydrogen and carbon oxides by steam reforming of the hydrocarbon containing feed stream with steam in the steam reformer according to the present disclosure is of advantage in that the plant facilitates minimizing the amount of ammonia formed during the synthesis gas production by catalytic oxidation of ammonia. The catalyst unit of the plant comprising the first catalytic zone performs selective catalytic reduction (SCR) of nitrogen oxides with ammonia to nitrogen, and the second catalytic zone performs catalytic oxidation of ammonia to nitrogen oxides. Thus, the emission of impurities to the atmosphere from the plant is significantly reduced by the selective reduction of nitrogen oxides and oxidization of ammonia using catalytic conversion.

Embodiments of the present disclosure substantially eliminate or at least partially address the aforementioned technical drawbacks in existing technologies by minimizing the amount of ammonia formed during the synthesis gas production by catalytic oxidation of ammonia.

### DETAILED DESCRIPTION OF THE DRAWINGS

**FIG. 1** is a block diagram of a plant **100** for producing a synthesis gas comprising hydrogen and carbon oxides by steam reforming of a hydrocarbon containing feed stream with steam in a steam reformer **102** with minimized emissions of ammonia according to an embodiment of the present disclosure. The plant **100** includes a steam reformer **102,** a plurality of catalyst filled reformer tubes **104AN,** a crude synthesis gas stream discharging means **106,** a reformer furnace **108,** a flue gas duct **110,** a catalyst unit **112,** a first catalytic zone **114,** a second catalytic zone **116,** a hydrocarbon containing feed stream and a reforming steam stream providing means **118,** a stripping apparatus **120,** a condensate stream depleted in ammonia routing out means **122,** a first injection port **124,** at least two heat exchangers **126** and a second injection point **128.** The synthesis gas comprising hydrogen and carbon oxides is produced by steam reforming of a hydrocarbon containing feed stream with steam with minimized emissions of ammonia in the steam reformer **102.** The steam reformer **102** includes a plurality of catalyst filled reformer tubes **104A-N** with means for introducing the hydrocarbon containing feed stream and steam into the reformer tubes **104A-N** and means for discharging a crude synthesis gas stream from the reformer tubes **104A-N.** The reformer furnace **108** is provided with a floor, a ceiling, and side walls to form a furnace interior. The reformer tubes **104A-N** are arranged inside the furnace interior and heated by a plurality of burners. The flue gas duct **110** is arranged in fluid connection to the furnace interior through one of the side walls. The catalyst unit **112** is arranged inside of the flue gas duct **110** and outside of the furnace interior. The catalyst unit **112** comprises the first catalytic zone **114** that is active for the selective catalytic reduction (SCR) of nitrogen oxides with ammonia to nitrogen, and the second catalytic zone **116** that is active for catalytic oxidation of ammonia to nitrogen oxides. The hydrocarbon containing feed stream and the reforming steam stream are provided through the hydrocarbon containing feed stream and the reforming steam stream providing means **118** and introduced into the reformer tubes **104A-N** through a hydrocarbon containing feed stream introducing means. A fuel gas stream and an oxygen containing oxidant stream are provided through a fuel gas stream and an oxygen containing oxidant stream providing means and are introduced into the plurality of burners. The fuel gas stream is combusted with the oxygen containing oxidant stream in the plurality of burners and thereby heating the reformer tubes **104A-N** to generate a flue gas stream comprising nitrogen oxides. The hydrocarbon containing feed stream with the reforming steam stream is converted under steam reforming conditions in the reformer tubes **104A-N** and a crude synthesis gas comprising hydrogen, carbon oxides, unconverted steam, and ammonia is discharged from the reformer tubes **104A-N** through the crude synthesis gas stream discharging means **106.** The flue gas stream is discharged from the furnace interior through the flue gas duct **110** through a flue gas stream discharging means and at least a portion, preferably all of the flue gas stream is routed through the catalyst unit **112** through a flue gas stream routing means. The crude synthesis gas stream is cooled in at least one cooling apparatus to a temperature below its dew point to form an aqueous condensate stream comprising ammonia. A synthesis gas stream depleted in water and ammonia is separated from the aqueous condensate stream comprising ammonia using a phase separation apparatus and discharged from the phase separation apparatus. The aqueous condensate stream comprising ammonia is stripped with a stripping gas stream in the stripping apparatus **120** and a condensate stream depleted in ammonia is routed out from the stripping apparatus **120** through the condensate stream depleted in ammonia routing out means **122.** A stripping gas stream enriched in ammonia is routed out from the stripping apparatus **120** through a stripping gas stream enriched in ammonia routing out means from the stripping apparatus **120.** At least a portion, preferably all of the stripping gas stream enriched in ammonia is introduced into the flue gas duct **110** through the stripping gas stream enriched in ammonia introducing means at a first injection point **124** provided on the flue gas duct **110** upstream of the catalyst unit **112.** Both the at least a portion of the flue gas stream and the at least a portion of the stripping gas stream enriched in ammonia pass through the first catalyst zone **114** and subsequently through the second catalyst zone **116** of the catalyst unit **112.** Optionally, at least two heat exchangers **126** are arranged in the flue gas duct **110** between the first injection point **124** for the stripping gas stream enriched in ammonia and the catalyst unit **112.** Optionally, an additional second injection point **128** for the stripping gas stream enriched in ammonia is provided on the flue gas duct **110** upstream of the position of the first injection point **124** with regard to the flow direction of the flue gas. The location of the second injection point **128** is selected so that the average temperature of the flue gas inside of the flue gas duct **110** at this location equals 400 °C or above, preferably 500 °C or above, when the reformer furnace **108** is operated.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### LIST OF REFERENCE NUMERALS

- 100: - plant
- 102: - steam reformer
- 104A-N: - a plurality of catalyst filled reformer tubes
- 106: - crude synthesis gas stream discharging means
- 108: - reformer furnace
- 110: - flue gas duct
- 112: - catalyst unit
- 114: - first catalytic zone
- 116: - second catalytic zone
- 118: - hydrocarbon containing feed stream and reforming steam stream providing means
- 120: - stripping apparatus
- 122: - condensate stream depleted in ammonia routing out means
- 124: - first injection point
- 126: - at least two heat exchangers
- 128: - second injection point

## Claims

1. Process for producing a synthesis gas comprising hydrogen and carbon oxides by steam reforming of a hydrocarbon containing feed stream with steam in a steam reformer (102), with minimized emissions of ammonia, the process comprising the following steps:
(a) Providing a steam reformer (102), comprising:
(a1) a plurality of catalyst filled reformer tubes (104A-N) with means for introducing the hydrocarbon containing feed stream and steam into the reformer tubes (104A-N), and means (106) for discharging a crude synthesis gas stream from the reformer tubes (104A-N);
(a2) a reformer furnace (108) with a floor, a ceiling and side walls which form a furnace interior, with the reformer tubes (104A-N) being arranged inside of the furnace interior and being heated by a plurality of burners;
(a3) a flue gas duct (110) being arranged in fluid connection to the furnace interior through one of the side walls;
(a4) a catalyst unit (112) being arranged inside of the flue gas duct (110) and outside of the furnace interior, the catalyst unit (112) comprising a first catalytic zone (114) active for the selective catalytic reduction (SCR) of nitrogen oxides with ammonia to nitrogen, and a second catalytic zone (116) active for catalytic oxidation of ammonia to nitrogen oxides;
(b) providing the hydrocarbon containing feed stream and a reforming steam stream and introducing the hydrocarbon containing feed stream and the reforming steam stream into the reformer tubes (104A-N);
(c) providing a fuel gas stream and an oxygen containing oxidant stream and introducing the fuel gas stream and the oxygen containing oxidant stream into the burners, combusting the fuel gas stream with the oxygen containing oxidant stream in the burners and thereby heating the reformer tubes (104A-N) and generating a flue gas stream comprising nitrogen oxides;
(d) converting the hydrocarbon containing feed stream with the reforming steam stream under steam reforming conditions in the reformer tubes (104A-N), discharging a crude synthesis gas comprising hydrogen, carbon oxides, unconverted steam, and ammonia from the reformer tubes (104A-N);
(e) discharging the flue gas stream from the furnace interior through the flue gas duct (110), and routing at least a portion, preferably all of the flue gas stream through the catalyst unit (112);
(f) cooling the crude synthesis gas stream in at least one cooling apparatus to a temperature below its dew point to form an aqueous condensate stream comprising ammonia, separating and discharging a synthesis gas stream depleted in water and ammonia from the aqueous condensate stream comprising ammonia using a phase separation apparatus;
(g) stripping the aqueous condensate stream comprising ammonia with a stripping gas stream in a stripping apparatus (120), routing out a condensate stream depleted in ammonia from the stripping apparatus (120), routing out a stripping gas stream enriched in ammonia from the stripping apparatus (120);
(h) introducing at least a portion, preferably all of the stripping gas stream enriched in ammonia into the flue gas duct (110) at a first injection point (124) provided on the flue gas duct (110) upstream of the catalyst unit (112);
(i) wherein both the at least a portion of the flue gas stream and the at least a portion of the stripping gas stream enriched in ammonia pass through the first catalyst zone (114) and subsequently through the second catalyst zone (116) of the catalyst unit (112).

2. Process according to claim 1, **characterized in that** at least a portion, preferably all of the condensate stream depleted in ammonia, except a purge stream, is used to generate at least a part of the reforming steam stream.

3. Process according to claim 1 or 2, **characterized in that** the first catalyst zone (114) and the second catalyst zone (116) of the catalyst unit (112) comprise at least one catalyst, selected from the group comprising:
Catalyst beds of particulate catalysts, catalytic wire meshes, honeycomb catalysts, structured packing catalysts,
wherein the catalyst to be used in the first catalyst zone (114) is active for the selective catalytic reduction (SCR) of nitrogen oxides with ammonia to nitrogen, and the catalyst to be used in the second catalyst zone (116) is active for catalytic oxidation of ammonia to nitrogen oxides.

4. Process according to any of the preceding claims, **characterized in that** in the catalyst unit (112), the second catalyst zone (116) is arranged downstream of the first catalyst zone (114) , with regard to the flow direction of the flue gas.

5. Process according to any of the preceding claims, **characterized in that** all, or a constant portion, of the stripping gas stream enriched in ammonia is introduced into the flue gas duct (110).

6. Process according to any of the preceding claims, **characterized in that** at least one, preferably at least two heat exchangers (126) are arranged in the flue gas duct (110) between the first injection point (124) for the stripping gas stream enriched in ammonia and the catalyst unit (112).

7. Process according to any of the preceding claims, **characterized in that** the location of the first injection point (124) is selected so that the average temperature of the flue gas inside of the flue gas duct (110) at this location equals 500 °C or below, preferably 400 °C or below, when the reformer furnace (108) is operated.

8. Process according to any of the preceding claims, **characterized in that** additionally a second injection point (128) for the stripping gas stream enriched in ammonia is provided on the flue gas duct (110) upstream of the position of the first injection point (124), with regard to the flow direction of the flue gas, wherein the location of the second injection point (128) is selected so that the average temperature of the flue gas inside of the flue gas duct (110) at this location equals 400 °C or above, preferably 500 °C or above, when the reformer furnace (108) is operated.

9. Plant (100) for producing a synthesis gas comprising hydrogen and carbon oxides by steam reforming of a hydrocarbon containing feed stream with steam in a steam reformer (102), with minimized emissions of ammonia, the plant comprising the following means and apparatuses, arranged in fluid connection with one another:
(a) a steam reformer (102), comprising:
(a1) a plurality of catalyst filled reformer tubes (104A-N) with means for introducing the hydrocarbon containing feed stream and steam into the reformer tubes (104A-N), and means (106) for discharging a crude synthesis gas stream from the reformer tubes (104A-N);
(a2) a reformer furnace (108) with a floor, a ceiling and side walls which form a furnace interior, with the reformer tubes (104A-N) being arranged inside of the furnace interior and being heated by a plurality of burners;
(a3) a flue gas duct (110) being arranged in fluid connection to the furnace interior through one of the side walls;
(a4) a catalyst unit (112) being arranged inside of the flue gas duct (110) and outside of the furnace interior, the catalyst unit (112) comprising a first catalytic zone (114) active for the selective catalytic reduction (SCR) of nitrogen oxides with ammonia to nitrogen, and a second catalytic zone (116) active for catalytic oxidation of ammonia to nitrogen oxides;
(b) means (118) for providing the hydrocarbon containing feed stream and a reforming steam stream and means for introducing the hydrocarbon containing feed stream and the reforming steam stream into the reformer tubes (104A-N);
(c) means for providing a fuel gas stream and an oxygen containing oxidant stream and introducing the fuel gas stream and the oxygen containing oxidant stream into the burners;
(d) means (106) for discharging a crude synthesis gas comprising hydrogen, carbon oxides, unconverted steam, and ammonia from the reformer tubes (104A-N);
(e) means for discharging a flue gas stream from the furnace interior through the flue gas duct (110), and means for routing at least a portion, preferably all of the flue gas stream through the catalyst unit (112);
(f) at least one cooling apparatus for cooling the crude synthesis gas stream to a temperature below its dew point to form an aqueous condensate stream comprising ammonia, a phase separation apparatus for separating and discharging a synthesis gas stream depleted in water and ammonia from the aqueous condensate stream comprising ammonia;
(g) a stripping apparatus (120) for stripping the aqueous condensate stream comprising ammonia with a stripping gas stream, means (122) for routing out a condensate stream depleted in ammonia from the stripping apparatus (120), means for routing out a stripping gas stream enriched in ammonia from the stripping apparatus (120);
(h) means for introducing at least a portion, preferably all of the stripping gas stream enriched in ammonia into the flue gas duct (110) at a first injection point (124) provided on the flue gas duct (110) upstream of the catalyst unit (112);
(i) wherein means are comprised that allow that both the at least a portion of the flue gas stream and the at least a portion of the stripping gas stream enriched in ammonia pass through the first catalyst zone (114) and subsequently through the second catalyst zone (116) of the catalyst unit (112).

10. Plant (100) according to claim 9, **characterized in that** means are comprised that allow that at least a portion, preferably all of the condensate stream depleted in ammonia, except a purge stream, is used to generate at least a part of the reforming steam stream.

11. Plant (100) according to claim 9 or 10, **characterized in that** the first catalyst zone (114) and the second catalyst zone (116) of the catalyst unit (112) comprise at least one catalyst, selected from the group comprising:
Catalyst beds of particulate catalysts, catalytic wire meshes, honeycomb catalysts, structured packing catalysts,
wherein the catalyst to be used in the first catalyst zone (114) is active for the selective catalytic reduction (SCR) of nitrogen oxides with ammonia to nitrogen, and the catalyst to be used in the second catalyst zone (116) is active for catalytic oxidation of ammonia to nitrogen oxides.

12. Plant (100) according to any of claims 9 to 11, **characterized in that** in the catalyst unit (112), the second catalyst zone (116) is arranged downstream of the first catalyst zone (114), with regard to the flow direction of the flue gas.

13. Plant (100) according to any of claims 9 to 12, **characterized in that** means are comprised that allow that all, or a constant portion, of the stripping gas stream enriched in ammonia is introduced into the flue gas duct (110).

14. Plant (100) according to any of claims 9 to 13, **characterized in that** at least one, preferably at least two heat exchangers (126) are arranged in the flue gas duct (110) between the first injection point (124) for the stripping gas stream enriched in ammonia and the catalyst unit (112).

15. Plant (100) according to any of claims 9 to 14, **characterized in that** the location of the first injection point (124) is selected so that the average temperature of the flue gas inside of the flue gas duct (110) at this location equals 500 °C or below, preferably 400 °C or below, when the reformer furnace (108) is operated.

16. Plant (100) according to any of claims 9 to 15, **characterized in that** additionally a second injection point (128) for the stripping gas stream enriched in ammonia is provided on the flue gas duct (110) upstream of the position of the first injection point (124), with regard to the flow direction of the flue gas, wherein the location of the second injection point (128) is selected so that the average temperature of the flue gas inside of the flue gas duct (110) at this location equals 400 °C or above, preferably 500 °C or above, when the reformer furnace (108) is operated.
